# EUROPÄISCHE PATENTSCHRIFT

(11) **EP 2 529 095 B1**
(45) Veröffentlichungstag und Bekanntmachung des Hinweises auf die Patenterteilung: **25.09.2013**
(21) Anmeldenummer: 10798027.8
(22) Anmeldetag: 10.12.2010
(51) Int. Cl.: F16K 31/10, F16K 31/52, F02M 25/07, F02B 37/18, F02B 39/00

(54) **GETRIEBEANORDNUNG SOWIE ABGASTURBOLADER**
GEAR ARRANGEMENT AND EXHAUST TURBOCHARGER
ARRENGEMENT DE BOITE DE VITESSE ET TURBOCOMPRESSEUR À GAZ D'ÉCHAPPEMENT

(30) Priorität: 26.01.2010 DE 102010001210
(43) Veröffentlichungstag der Anmeldung: 05.12.2012
(73) Patentinhaber: Robert Bosch GmbH, 70442 Stuttgart (DE)
(72) Erfinder: BAEUERLE, Michael, 71735 Eberdingen (DE); WOERZ, Stefan, 71665 Vaihingen/Enz (DE); OUDART, Joel, 71254 Ditzingen (DE)
(86) Internationale Anmeldenummer: PCT/EP2010/069337
(87) Internationale Veröffentlichungsnummer: WO 2011/091898

(56) Entgegenhaltungen:
- WO-A1-03/029679
- WO-A1-2005/073606
- DE-A1-102008 014 609
- FR-A1- 2 823 529
- US-A- 2 025 264
- US-A- 5 205 125

## Beschreibung

Die Erfindung betrifft eine Getriebeanordnung für eine Verstelleinrichtung, insbesondere eines Wastegates eines Abgasturboladers, mit einem Viergelenk-Koppelgetriebe, welches über eine mit einem Antrieb wirkverbundene Antriebsschwinge, eine Abtriebsschwinge und eine die Antriebsschwinge und die Abtriebsschwinge wirkverbindende Koppel verfügt. Die Erfindung betrifft weiterhin einen Abgasturbolader.

### Stand der Technik

Abgasturbolader mit einem Wastegate, welches mittels einer Verstelleinrichtung beziehungsweise eines Stellantriebs verstellbar sind, sind aus dem Stand der Technik bekannt. Die Verstelleinrichtung kann beispielsweise eine pneumatisch betriebene Verstelleinrichtung sein. Alternativ kann die Ansteuerung des Wastegates jedoch auch mittels einer elektrischen Verstelleinrichtung erfolgen. Gegenüber den bisher verwendeten, vorstehend beschriebenen pneumatischen Verstelleinrichtungen sind mit diesen erheblich größere Stellkräfte bereitstellbar. Dabei werden üblicherweise dauerhaft Werte bis etwa 250 N erreicht, welche zum optimierten Dichthalten des Wastegates in dessen Geschlossenenstellung erforderlich sind.

Ist die elektrische Verstelleinrichtung ein Drehsteller, so erfolgt die Kraftübertragung häufig über ein Viergelenk-Koppelgetriebe beziehungsweise über einen Viergelenktrieb. Das Viergelenk-Koppelgetriebe verfügt über die Antriebsschwinge, die Abtriebsschwinge und die Koppel, über welche die Antriebsschwinge mit der Abtriebsschwinge wirkverbunden ist. Die elektrische Verstelleinrichtung erreicht gegenüber einer pneumatischen Verstelleinrichtung üblicherweise eine um den Faktor zwei bis drei höhere Zuhaltekraft an dem Wastegate. Durch diese hohe Zuhaltekraft können Abhebebewegungen einer Wastegateklappe infolge von Abgasdruckpulsen vermieden werden. Somit steht insbesondere im unteren Drehzahlbereich einer Brennkraftmaschine, in welchem das Wastegate des Abgasturboladers geschlossen ist, ein signifikant erhöhter Enthalpiebetrag vor einer Abgasturbine des Abgasturboladers zur Verfügung. Dieser führt wiederum zu einer Ladedruckerhöhung, die sich in ein erhöhtes Drehmoment der Brennkraftmaschine umsetzen lässt.

Weiterhin weisen die elektrischen Verstelleinrichtungen den Vorteil auf, dass das Wastegate in Teillastbereichen der Brennkraftmaschine, in welchen keine Turboaufladung erforderlich ist, vollständig geöffnet werden kann. Dadurch lässt sich der Abgasgegendruck minimieren, was wiederum durch eine Verringerung der Ausschiebearbeit zu einem verringerten Verbrauch der Brennkraftmaschine führt. Bedingt durch den Druckunterschied an dem Wastegate zwischen Abgastrakt und Umgebung wirkt der Verstelleinrichtung bei einem Schließen des Wastegates eine entsprechende Druckkraft entgegen. Diese Druckkraft muss während des Schließvorgangs überwunden werden. Der Öffnungsvorgang wird dagegen durch die Druckkraft unterstützt. Weil der Antrieb und die diesem eventuell zugeordnete Ansteuerung und/oder Leistungsendstufe entsprechend der größeren Stellkraft - in diesem Fall die zum Schließen des Wastegates benötigte Stellkraft - auszulegen sind, steigen Baugröße und elektrische Leistungsaufnahme des Antriebs. Dabei wirkt die Druckkraft lediglich auf die Verstelleinrichtung, wenn das Wastegate geschlossen oder nur leicht geöffnet ist. Ist das Wastegate im Wesentlichen vollständig geöffnet, so wirken die Druckkräfte nicht oder nur geringfügig auf die Verstelleinrichtung ein.

Aus dem Stand der Technik ist beispielsweise die DE 10 2008 014 609 A1 bekannt. Diese zeigt einen Aktuator zum Betätigen eines Schaltelements einer Verbrennungskraftmaschine mit einem elektromotorischen Stellantrieb, der über ein Getriebe auf das Schaltelement wirkt. Dabei soll das Getriebe wenigstens ein elastisches Element aufweisen, das die maximalen Kräfte oder Momente wenigstens auf das Schaltelement selbst in wenigstens einer Stellrichtung begrenzt. Somit wird das Betätigen des Schaltelements mit definierten Kräften ermöglicht. Das elastische Element ist dabei an einer beliebigen Stelle des Getriebes zwischen dem elektromotorischen Stellantrieb und dem Schaltelement angeordnet.

Aus der US 2 024 264 A ist eine Getriebeandordnung zur Verstellung eines Ventils bekannt, die ein federbeauschlagtes Viergelenk-Koppelgetriebe umfasst.

Die WO 03/029679 offenbart eine Getriebeanordnung zur Betätigung eines Ventils, die ein Viergelenk-Koppelgetriebe umfasst, bei dem eine mit einem Antrieb verbundene scheibenförmige Antriebsschwinge, eine Abtriebsschwinge und eine die Antriebsschwinge und die Abtriebsschwinge wirkverbindende Koppel vorgesehen sind. Ein ortsfest gelagertes Federelement ist mit der Abtriebsschwinge wirkverbunden.

Die FR 2 823 529 A1 offenbart eine Getriebeandordnung mit einem federbeaufschlagten Koppelgetriebe, die insgesamt fünf Drehgelenke aufweist und zur Betätigung eines Ventils dient.

### Offenbarung der Erfindung

Die Getriebeanordnung mit den Merkmalen des Anspruchs 1 ermöglicht dagegen eine Verringerung des mittels des Antriebs zu erzeugenden Drehmoments, wobei dennoch ein zuverlässiges Verstellen der zu verstellenden Einrichtung, beispielsweise des Abgasturboladers, ermöglicht wird. Dies wird erfindungsgemäß erreicht, indem mindestens ein mit seiner ersten Seite an einem Gehäuse der Getriebeanordnung gelagertes Federelement mit seiner zweiten Seite mit der Antriebsschwinge zur Unterstützung einer Bewegung des Viergelenk-Koppelgetriebes in zumindest eine Bewegungsrichtung wirkverbunden ist, wobei die Antriebsschwinge um eine Antriebslagerstelle drehbar gelagert ist und das Federelement an einer Hebelarmschwinge angreift, welche mit der Antriebsschwinge verbunden und ebenfalls drehbar um die Antriebslagerstelle gelagert ist. Der Antrieb wirkt im Bereich der Antriebslagerstelle auf die Antriebsschwinge ein, um so das Viergelenk-Koppelgetriebe zu betätigen. Beispielsweise ist die Antriebsschwinge auf einer Antriebswelle des Antriebs angeordnet. Ebenfalls drehbar um die Antriebslagerstelle gelagert ist die Hebelarmschwinge. Dabei ist die Hebelarmschwinge mit der Antriebsschwinge verbunden. Auch eine einstückige Ausführung von Hebelarmschwinge und Antriebsschwinge kann vorgesehen sein. Zum Unterstützen der Bewegung des Viergelenk-Koppelgetriebes beziehungsweise des Verstellens des Wastegates soll das Federelement an der Hebelarmschwinge angreifen. Der Angriffspunkt des Federelements an der Hebelarmschwinge ist dabei von der Antriebslagerstelle beabstandet, sodass um diese ein Drehmoment erzeugt wird, welches auf die Antriebsschwinge des Viergelenk-Koppelgetriebes wirkt. Die Federkraft des Federelements soll derart gerichtet sein, dass die Bewegung des Viergelenk-Koppelgetriebes in die zumindest eine Bewegungsrichtung unterstützt wird.

Vorteilhaft werden auf diese Weise höhere Schließkräfte erreicht, ohne den Antrieb und/oder ein Getriebe des Antriebs größer auslegen zu müssen. Entsprechend kann selbstverständlich unter Beibehaltung der Schließkraft der elektrische Antrieb beziehungsweise das Getriebe kleiner ausgelegt und damit deren Baugrößen verringert werden. Die Bewegungsrichtung, in welche die Bewegung des Viergelenk-Koppelgetriebes unterstützt werden soll, ist vorzugsweise die Richtung einer Geschlossenstellung des Wastegates. Die Geschlossenstellung liegt dabei vor, wenn das Wastegate des Abgasturboladers geschlossen ist; von einer Offenstellung wird gesprochen, wenn das Wastegate im Wesentlichen geöffnet ist.

Das Federelement soll insbesondere dann die Bewegung unterstützen, wenn die Verstelleinrichtung beziehungsweise das Wastegate sich bereits im Bereich der Geschlossenstellung befindet. In diesem Bereich tritt die eingangs angesprochene Druckkraft auf, welche auf die Verstelleinrichtung derart einwirkt, dass das Wastegate in die Offenstellung gedrängt wird. Von Bedeutung ist es insbesondere, dass das Federelement eine Kopplung zwischen dem Gehäuse des Viergelenk-Koppelgetriebes und der Antriebsschwinge herstellt. Das Federelement wird also nicht lediglich zwischen den einzelnen Elementen des Viergelenk-Koppelgetriebes, also der Antriebsschwinge, der Abtriebsschwinge oder der Koppel und dem Antrieb eingebracht. Vielmehr soll das Federelement von außen an diesem angreifen.

Ein weiterer Vorteil der erfindungsgemäßen Getriebeanordnung ist eine höhere Dynamik der Verstelleinrichtung in Richtung der Geschlossenstellung des Wastegates. Das zum Verlagern in Richtung der Geschlossenstellung benötigte Drehmoment ist geringer, somit ist die maximale Drehzahl des elektrischen Antriebs für eine konstante Spannung höher. Damit kann eine schnellere Verlagerung in Richtung der Geschlossenstellung durchgeführt werden. Somit wird eine geringere Rückstellzeit erreicht. Dies verbessert das Ansprechverhalten des Abgasturboladers, insbesondere im transienten Fall, und verbessert damit den Ladedruckaufbau.

In einer bevorzugten Ausführungsform Ist vorgesehen, das Federelement vorzuspannen, sodass auch im Bereich der Geschlossenstellung eine von dem Federelement erzeugte Federkraft vorliegt, um das Wastegate in Richtung der Geschlossenstellung zu drängen. Somit wird, falls zwischen dem Antrieb und der Antriebsschwinge ein Getriebe vorgesehen ist, ein zuverlässiges Anliegen von Zahnradflanken des Getriebes und auch von Lagerstellen erreicht, womit ein geräuscharmer, verschleißreduzierter Lauf des Getriebes erzielt wird. Es soll darauf hingewiesen werden, dass die Verstelleinrichtung zum Verstellen beliebiger Einrichtungen verwendet werden kann, sie ist also nicht auf die Verwendung zusammen mit dem Abgasturbolader beschränkt. In diesem Fall kann die Geschlossenstellung in allgemeiner Form als erste Stellung und die Offenstellung als zweite Stellung bezeichnet werden.

Eine Weiterbildung der Erfindung sieht vor, dass die Hebelarmschwinge in einem bestimmten Winkel zu der Antriebsschwinge angeordnet ist und/oder kürzer, gleichlang oder länger als diese ist. Insbesondere wenn die Hebelarmschwinge und die Antriebsschwinge einstückig ausgebildet sind beziehungsweise die Antriebsschwinge die Hebelarmschwinge mit ausbildet, kann der bestimmte Winkel gleich Null sein, also kein Winkelversatz zwischen Antriebsschwinge und Hebelarmschwinge vorliegen. Alternativ kann jedoch die Hebelarmschwinge unter einem Winkel, welcher von 0 Grad verschieden ist, zu der Antriebsschwinge angeordnet werden. Dabei kann sie kürzer, gleichlang beziehungsweise länger als die Antriebsschwinge sein. Die Länge der Antriebsschwinge bezeichnet dabei den Abstand zwischen der Antriebslagerstelle und einer Koppellagerstelle, an welcher die Antriebsschwinge mit der Koppel verbunden ist. Die Länge der Hebelarmschwinge ist die Strecke zwischen der Antriebslagerstelle, um welche die Hebelarmschwinge drehbar gelagert ist, und dem Kraftangriffspunkt, an welchem das Federelement die Federkraft in die Hebelarmschwinge einleitet beziehungsweise an dieser befestigt ist.

Eine Weiterbildung der Erfindung sieht vor, dass das Federelement das Viergelenk-Koppelgetriebe in Richtung einer ersten Stellung drängt. Die erste Stellung ist dabei die Geschlossenstellung der Verstelleinrichtung beziehungsweise des Wastegates. Die Bewegungsrichtung, in welche die Bewegung des ViergelenkKoppelgetriebes unterstützt werden soll, ist also zu dieser ersten Stellung hin gerichtet.

Eine Weiterbildung der Erfindung sieht vor, dass das Federelement derart gewählt ist, dass es in der ersten Stellung eine Vorspannung auf die Hebelarmschwinge bewirkt. Das Federelement soll also nicht derart ausgelegt sein, dass es, sobald die erste Stellung erreicht ist, entspannt ist und keine Federkraft mehr erzeugt. Vielmehr soll auch nach Erreichen der ersten Stellung beziehungsweise der Geschlossenstellung die Federkraft vorliegen und somit als Vorspannung dienen. Dazu ist insbesondere die Länge des Federelements entsprechend zu wählen.

Eine Weiterbildung der Erfindung sieht vor, dass das Federelement derart angeordnet ist, dass eine Hebelwirkung der Hebelarmschwinge in einem Winkelstellungsbereich der Antriebsschwinge, in welchem die erste Stellung vorliegt, am größten ist. Liegt das Viergelenk-Koppelgetriebe beziehungsweise die zu verstellende Einrichtung in der ersten Stellung vor, so soll demnach der Abstand zwischen dem Punkt, an welchem das Federelement an der Hebelarmschwinge angreift, und der Antriebslagerstelle in Richtung der Erstreckung des Federelements maximal oder nahezu maximal sein. Dazu geht das Federelement vorzugsweise in der ersten Stellung in einem rechten Winkel von der Hebelarmschwinge aus beziehungsweise erzeugt die Federkraft derart, dass diese senkrecht zu einer Längsachse der Hebelarmschwinge auf diese wirkt. Wird dagegen das Viergelenk-Koppelgetriebe aus der ersten Stellung beziehungsweise die Antriebsschwinge aus dem Winkelstellungsbereich herausbewegt, so soll die Hebelwirkung der Hebelarmschwinge geringer werden.

Eine Weiterbildung der Erfindung sieht vor, dass das Federelement derart angeordnet ist, dass die Hebelwirkung ausgehend von der ersten Stellung in Richtung einer zweiten Stellung des Viergelenk-Koppelgetriebes abnimmt. Diese zweite Stellung ist beispielsweise die Offenstellung, in welcher das Wastegate geöffnet ist. Die Hebelwirkung soll also kleiner werden, je weiter das Viergelenk-Koppelgetriebe in Richtung der zweiten Stellung verlagert wird. Auf diese Weise wird das von der Federkraft bewirkte Drehmoment auf die Antriebsschwinge verringert, sodass der Antrieb bei dem Verlagern in die zweite Stellung ihr nicht entgegenwirken muss. Auf diese Weise kann zwar das Verlagern in die erste Stellung unterstützt werden, gleichzeitig wird jedoch das Verlagern in die zweite Stellung nicht behindert.

Eine Weiterbildung der Erfindung sieht vor, dass der Antrieb über ein Getriebe mit der Antriebsschwinge verbunden ist, wobei das Getriebe ein dem Antrieb zugeordnetes Antriebsrad und ein der Antriebsschwinge zugeordnetes, mit dem Antriebsrad zusammenwirkendes Abtriebsrad aufweist. Häufig ist es vorteilhaft, eine Umsetzung der Drehzahl des Antriebs zwischen Antrieb und Antriebsschwinge vorzunehmen. Beispielsweise ist der Antrieb ein vergleichsweise schnelllaufender Elektromotor, während die Antriebsschwinge sich vergleichsweise langsam drehen soll, aber dafür mit einem hohen Drehmoment beaufschlagt werden muss. Zu diesem Zweck ist das Getriebe vorgesehen, wobei dieses über das Antriebsrad und das Abtriebsrad verfügt, welche miteinander zusammenwirken. Sowohl Antriebsrad als auch Abtriebsrad sind vorzugsweise als Zahnrad ausgeführt.

Eine Weiterbildung der Erfindung sieht vor, dass das Antriebsrad einen sich über den Umfang ändernden Wälzkurvenradius und das Abtriebsrad einen zu diesem komplementär verlaufenden Wälzkurvenradius aufweisen, wobei die Wälzkurvenradien in einem Drehwinkelbereich um die Strecklage des Viergelenk-Koppelgetriebes zur zumindest bereichsweisen Ausbildung einer ersten Übersetzung des Getriebes und außerhalb des Drehwinkelbereichs zur Ausbildung mindestens einer zweiten, zur ersten Übersetzung verschiedenen Übersetzung gewählt sind. Auf diese Weise können für verschiedene Drehwinkelstellungen von Antriebsrad beziehungsweise Abtriebsrad unterschiedliche Übersetzungen vorliegen. Beispielsweise wird im Bereich der ersten Stellung ein vergleichsweise großes Drehmoment und im Bereich der zweiten Stellung eine dazu kleinere Übersetzung gewählt werden. Mit Vorteil kann es auch vorgesehen sein, dass die Übersetzung in dem Drehwinkelbereich kleiner ist als außerhalb des Drehwinkelbereichs. Auf diese Weise kann erreicht werden, dass die Übersetzung im Bereich einer Strecklage der Antriebsschwinge des Viergelenk-Koppelgetriebes verringert wird, da bedingt durch diese ohnehin bereits eine hohe Kraft auf die Koppel übertragen werden kann. Unter Strecklage ist dabei die Stellung der Antriebsschwinge zu verstehen, bei welcher einer gedachte Gerade in der Antriebslagerstelle und einer Verbindungsstelle zwischen der Antriebsschwinge und der Koppel mit der Koppel beziehungsweise einer gedachten Geraden zwischen den Verbindungspunkten der Koppel mit Antriebsschwinge und Abtriebsschwinge im Wesentlichen fluchtet, also quasi eine Verlängerung für diese darstellt.

Die Erfindung betrifft weiterhin einen Abgasturbolader mit einem Wastegate und einer Verstelleinrichtung zum Verstellen des Wastegates, wobei die Verstelleinrichtung eine Getriebeanordnung, insbesondere gemäß den vorstehenden Ausführungen, mit einem Viergelenk-Koppelgetriebe aufweist, wobei das Viergelenk-Koppelgetriebe über eine mit einem Antrieb wirkverbundene Antriebsschwinge, eine Abtriebsschwinge und eine die Antriebsschwinge und die Abtriebsschwinge wirkverbindende Koppel verfügt. Dabei ist vorgesehen, dass mindestens ein mit seiner ersten Seite an einem Gehäuse des Viergelenk-Koppelgetriebes gelagertes Federelement mit seiner zweiten Seite mit der Antriebsschwinge, der Abtriebsschwinge und/oder der Koppel zur Unterstützung einer Bewegung in zumindest eine Bewegungsrichtung wirkverbunden ist. Die Getriebeanordnung kann gemäß den vorstehenden Ausführungen weitergebildet sein.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine schematische Darstellung einer Getriebeanordnung für eine Verstelleinrichtung, mit einem Viergelenk-Koppelgetriebe, in einer ersten Stellung,
- Figur 2: die aus Figur 1 bekannte Getriebeanordnung in einer zweiten Stellung,
- Figur 3: ein Diagramm, in welchem eine Federkraft eines Federelements aufgetragen ist, welches mit seiner ersten Seite an einem Gehäuse der Getriebeanordnung und mit seiner zweiten Seite an einer Antriebsschwinge des Viergelenk-Koppelgetriebes angreift,
- Figur 4: einen Bereich einer weiteren Ausführungsform der Getriebeanordnung in der ersten Stellung, und
- Figur 5: die aus der Figur 4 bekannte Ausführungsform der Getriebeanordnung in der zweiten Stellung.

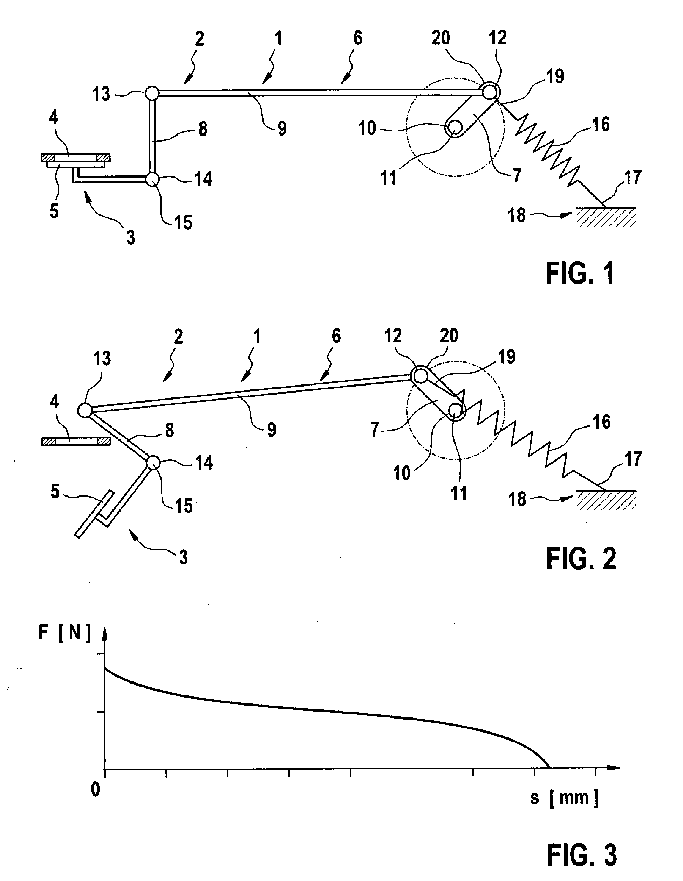

Die Figur 1 zeigt eine Getriebeanordnung 1 für eine Verstelleinrichtung 2 eines Wastegates 3 eines hier nicht näher dargestellten Abgasturboladers. Das Wastegate 3 besteht aus einer Wastegateöffnung 4 und einer Wastegateklappe 5, wobei mit der Wastegateklappe 5 die Wastegateöffnung 4 verschließbar ist. Die Verstelleinrichtung 2 ist eine elektrisch betätigte Stelleinrichtung, verfügt also über einen elektrischen Steller beziehungsweise elektrischen Antrieb (hier nicht dargestellt).

Die Getriebeanordnung 1 verfügt über ein Viergelenk-Koppelgetriebe 6 mit einer Antriebsschwinge 7, einer Abtriebsschwinge 8 und einer die Antriebsschwinge 7 und die Abtriebsschwinge 8 wirkverbindende Koppel 9. Die Antriebsschwinge 7 ist dabei um eine Antriebslagerstelle 10 drehbar gelagert. An dieser Antriebslagerstelle 10 ist sie mit einem hier nicht dargestellten Antrieb über eine Antriebswelle 11 wirkverbunden. Die Koppel 9 ist an einer Koppellagerstelle 12 drehbar an der Antriebsschwinge 7 gelagert. An der Abtriebsschwinge 8 ist eine weitere Koppellagerstelle 13 vorgesehen, in welcher die Koppel 9 an der Abtriebsschwinge 8 drehbar gelagert ist. Die Abtriebsschwinge 8 ist um eine Abtriebslagerstelle 14 drehbar gelagert und dazu vorzugsweise auf einer Abtriebswelle 15 befestigt. Über die Abtriebswelle 15 ist eine Wirkverbindung zwischen der Abtriebsschwinge 8 und dem Wastegate 3 des Abgasturboladers hergestellt. Das Viergelenk-Koppelgetriebe 6 beziehungsweise die Getriebeanordnung 1 ist also Bestandteil der Verstelleinrichtung 2 des Wastegates 3.

Die Getriebeanordnung 1 weist weiterhin ein Federelement 16 auf, welches mit seiner ersten Seite 17 an einem hier nur schematisch dargestellten Gehäuse 18 der Getriebeanordnung 1 und mit seiner zweiten Seite 19 mit der Antriebsschwinge 7 wirkverbunden ist. Das bedeutet, dass die erste Seite 17 des Federelements 16 relativ zu der Antriebslagerstelle 10 ortsfest, also unbeweglich ist. Das Federelement 16 bewirkt eine Federkraft auf die Antriebsschwinge 7, wobei bedingt durch deren Drehbewegung durch die Federkraft in Abhängigkeit der Drehwinkelstellung der Antriebsschwinge 7 jeweils ein unterschiedliches Drehmoment auf diese aufgebracht wird. Die zweite Seite 19 des Federelements 16 ist an einer Hebelarmschwinge 20 befestigt, welche in der hier dargestellten Ausführungsform einstückig mit der Antriebsschwinge 7 ausgeführt ist. Alternativ ist die Hebelarmschwinge 20 lediglich mit der Antriebsschwinge 7 verbunden und ebenfalls drehbar um die Antriebslagerstelle 10 gelagert. Dabei kann es vorgesehen sein, dass das Federelement 16, ebenso wie die Koppel 9, in der Koppellagerstelle 12 an der Hebelarmschwinge 20 beziehungsweise der Antriebsschwinge 7 angreift. Das Federelement 16 ist mit seiner ersten Seite (17) drehbar an dem Gehäuse 18 gelagert.

In der Figur 1 ist das Wastegate 3 und die Getriebeanordnung 1 in einer ersten Stellung dargestellt, welche einer Geschlossenstellung des Wastegates 3 entspricht. In dieser ist die Wastegateklappe 5 derart angeordnet, dass sie die Wastegateöffnung 4 verschließt. Entsprechend befinden sich auch die Antriebsschwinge 7, die Abtriebsschwinge 8 sowie die Koppel 9 in der ersten Stellung beziehungsweise der Geschlossenstellung. Das Federelement 16 und die Antriebsschwinge 7 sind in der ersten Stellung derart zueinander angeordnet, dass der Hebelweg, mit welchem das Federelement 16 an der Antriebsschwinge 7 mit Bezug auf die Antriebslagerstelle 10 angreift, maximal ist, also dem Abstand zwischen der Antriebslagerstelle 10 und der Koppellagerstelle 12 im Wesentlichen entspricht. Das bedeutet auch, dass das Federelement 16 beziehungsweise die von diesem bewirkte Federkraft im Wesentlichen rechtwinklig auf einer gedachten Geraden zwischen der Antriebslagerstelle 10 und der Koppellagerstelle 12 steht. In der ersten Stellung ist also die Hebelwirkung der Hebelarmschwinge 20 am größten.

Das Federelement 16 beziehungsweise dessen Länge ist dabei vorzugsweise derart gewählt, dass es auch in der ersten Stellung die Federkraft beziehungsweise eine Vorspannung auf die Hebelarmschwinge 20 bewirkt. Auch bei vollständig geschlossenem Wastegate 3 liegt also das Federelement 16 nicht in einer entspannten Form vor. Es ist ohne Weiteres erkennbar, dass das Federelement 16 beziehungsweise dessen Federkraft das Wastegate 3 beziehungsweise die Wastegateklappe 5 in Richtung der ersten Stellung beziehungsweise der Geschlossenstellung drängt.

Die Figur 2 zeigt die aus der Figur 1 bekannte Getriebeanordnung 1 in einer zweiten Stellung, welche einer Offenstellung des Wastegates 3 entspricht. Das bedeutet, dass die Wastegateklappe 5 zum Freigeben der Wastegateöffnung 4 angeordnet ist. Dazu wird die Getriebeanordnung 1 beziehungsweise die ihr zugeordneten Elemente in die zweite Stellung gebracht, sodass die Antriebsschwinge 7 mitsamt der Hebelarmschwinge 20 nun in einer zweiten Drehwinkelstellung vorliegt. Da sowohl die Antriebslagerstelle 10 als auch die Abtriebslagerstelle 14 ortsfest sind, wird durch das Verlagern der Antriebsschwinge 7, welches beispielsweise mittels des Antriebs über die Antriebswelle 11 bewirkt ist, ein Drehmoment an das Wastegate 3 übertragen, welches das Verlagern der Wastegateklappe 5 in die Offenstellung bewirkt. Umgekehrt kann selbstverständlich das Wastegate 3 aus der in der Figur 2 dargestellten Offenstellung in die in der Figur 1 dargestellte Geschlossenstellung gebracht werden. Bei dem Verlagern in Richtung der ersten Stellung liegt dabei eine erste Bewegungsrichtung und bei dem Verlagern in die zweite Stellung eine zweite Bewegungsrichtung vor.

Das Federelement 16 ist dabei derart angeordnet, dass es die Bewegung des Viergelenk-Koppelgetriebes 6 beziehungsweise von dessen Bestandteilen in die erste Bewegungsrichtung unterstützt. Dies ist vorteilhaft, da auf der der Wastegateklappe 5 abgewandten Seite der Wastegateöffnung 4 üblicherweise ein höherer Druck vorliegt als auf der Seite der Wastegateöffnung 4, auf welcher die Wastegateklappe 5 vorliegt. Diese Druckdifferenz bewirkt eine Druckkraft, welche die Wastegateklappe 5 in Richtung der Offenstellung drängt. Diese Druckkraft wird mittels des Federelements 16 entgegengewirkt, sodass ein zuverlässiges und dichtes Verschließen der Wastegateöffnung 4 mit der Wastegateklappe 5 realisiert ist. Zudem kann bei einer solchen Ausgestaltung der Getriebeanordnung 1 der Antrieb kleiner dimensioniert werden, da zum Verbringen der Getriebeanordnung 1 beziehungsweise des Wastegates 3 in die Geschlossenstellung ein geringeres Drehmoment ausreichend ist.

Bedingt durch das Angreifen des Federelements 16 an der Hebelarmschwinge 20 wird zudem erreicht, dass das Verlagern der Getriebeanordnung 1 beziehungsweise des Wastegates 3 in die zweite Stellung durch das Federelement 16 nicht behindert wird, weil die Hebelwirkung der Hebelarmschwinge 20, also der wirksame Hebelarm, umso kleiner wird, je weiter die Getriebeanordnung 1 in Richtung der zweiten Stellung verlagert wird. Dies ist ohne Weiteres der Figur 2 zu entnehmen.

Die Figur 3 zeigt ein Diagramm, in welchem die von dem Federelement 16 auf die Koppel 9 bewirkte Kraft F über einen Verstellweg s des Wastegates 3 aufgetragen ist. Die Kraft F ist dabei die Kraft, welche durch das Federelement 16 zusätzlich zu der von dem Antrieb bewirkten Kraft an der Koppel 9 anliegt. Das Diagramm zeigt, dass bei einem Verstellweg von s = 0 mm, was der Geschlossenstellung des Wastegates 3 entspricht, die Kraft F am größten ist und mit zunehmendem Verstellweg s, also während des Verlagerns des Wastegates 3 in die Offenstellung, degressiv verläuft. Das bedeutet, dass die Kraft F kleiner wird, obwohl während des Verlagerns des Wastegates 3 in die Geschlossenstellung das Federelement 16 gespannt wird, die von diesem bewirkte Federkraft also größer wird. Wie vorstehend erläutert, wird dabei der effektive Hebelarm reduziert, was zu dem degressiven Kraftverlauf an der Koppel 9 führt.

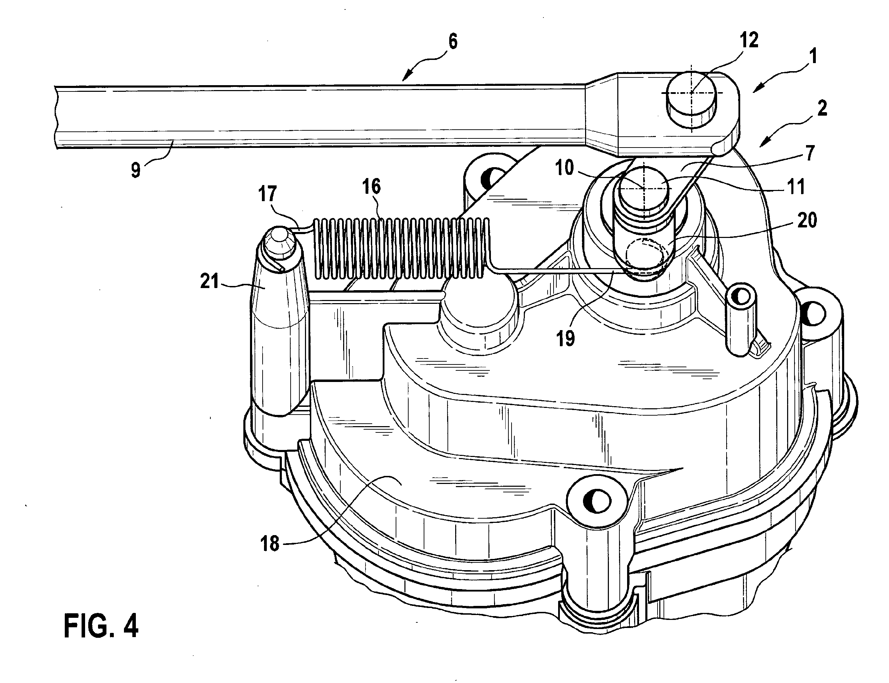

Die Figur 4 zeigt einen Bereich einer weiteren Ausführungsform der Getriebeanordnung 1. In dieser Ausführungsform ist die Hebelarmschwinge 20 getrennt von der Antriebsschwinge 7 ausgebildet. Sie liegt in einem bestimmten Winkel zu der Antriebsschwinge 7 vor, wobei der Winkel ungleich 0° ist. Die Länge der Hebelarmschwinge 20 ist geringer als die der Antriebsschwinge 7, wobei unter Länge der Hebelarmschwinge 20 der Abstand zwischen der Antriebslagerstelle 10 und dem Kraftangriffspunkt des Federelements 16 an der Hebelarmschwinge 20 verstanden wird. Die Länge der Antriebsschwinge 7 ist dagegen der Abstand zwischen der Antriebslagerstelle 10 und der Koppellagerstelle 12. In der Figur 4 ist ein Bereich des Gehäuses 18 dargestellt, wobei in diesem in der hier dargestellten Ausführungsform der Antrieb vorgesehen ist, welcher mit der Antriebsschwinge 7 verbunden ist. An dem Gehäuse 18 ist ein Koppelvorsprung 21 vorgesehen, an welchem das Federelement 16 mit seiner ersten Seite 17 gelagert ist. Das Federelement 16 ist beispielsweise als Schraubenzugfeder ausgeführt und weist auf der ersten Seite 17 und der zweiten Seite 19 jeweils einen Haken zum Einhängen an dem Koppelvorsprung 21 beziehungsweise der Hebelarmschwinge 20 auf. In der Figur 4 ist die Getriebeanordnung 1 in der ersten Stellung, also der Geschlossenstellung, abgebildet, womit das Federelement 16 in nahezu vollständig entspannter Form vorliegt.

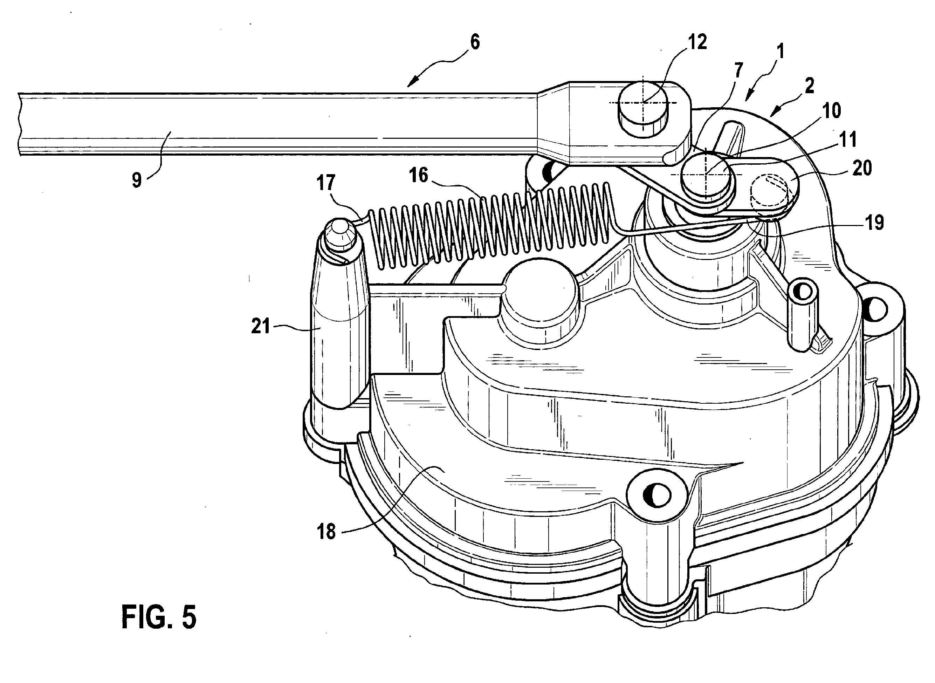

Die Figur 5 zeigt die aus der Figur 4 bekannte Ausführungsform der Getriebeanordnung 1 in der zweiten Stellung. Der Aufbau der Getriebeanordnung wurde bereits mit den vorstehenden Ausführungen erläutert, sodass insofern auf diese verwiesen sei.

## Patentansprüche

1. Getriebeanordnung (1) für eine Verstelleinrichtung (2), insbesondere eines Wastegates (3) eines Abgasturboladers, mit einem Viergelenk-Koppelgetriebe (6), welches über eine mit einem Antrieb wirkverbundene Antriebsschwinge (7), eine Abtriebsschwinge (8) und eine die Antriebsschwinge (7) und die Abtriebsschwinge (8) wirkverbindende Koppel (9) verfügt, wobei mindestens ein mit seiner ersten Seite (17) an einem Gehäuse (18) der Getriebeanordnung (1) gelagertes Federelement (16) mit seiner zweiten Seite (19) mit der Antriebsschwinge (7), der Abtriebsschwinge (8) und/oder der Koppel (9) zur Unterstützung einer Bewegung des Viergelenk-Koppelgetriebes (6) in zumindest eine Bewegungsrichtung wirkverbunden ist, und die Antriebsschwinge (7) um eine Antriebslagerstelle (10) drehbar gelagert ist und das Federelement (16) an einer Hebelarmschwinge (20) angreift, welche mit der Antriebsschwinge (7) verbunden und ebenfalls drehbar um die Antriebslagerstelle (10) gelagert ist.

2. Getriebeanordnung nach Anspruch 1, **dadurch gekennzeichnet, dass** die Hebelarmschwinge (20) in einem bestimmten Winkel zu der Antriebsschwinge (7) angeordnet ist und/oder kürzer, gleichlang oder länger als diese ist.

3. Getriebeanordnung nach Anspruch 1 oder 2, **dadurch gekennzeichnet, dass** das Federelement (16) das Viergelenk-Koppelgetriebe (6) in Richtung einer ersten Stellung drängt.

4. Getriebeanordnung nach Anspruch 3, **dadurch gekennzeichnet, dass** das Federelement (16) derart gewählt ist, dass es in der ersten Stellung eine Vorspannung auf die Hebelarmschwinge (20) bewirkt.

5. Getriebeanordnung nach Anspruch 3, **dadurch gekennzeichnet, dass** das Federelement (16) derart angeordnet ist, dass eine Hebelwirkung der Hebelarmschwinge (20) in einem Winkelstellungsbereich der Antriebsschwinge, in welchem die erste Stellung vorliegt, am größten ist.

6. Getriebeanordnung nach Anspruch 3, **dadurch gekennzeichnet, dass** das Federelement (16) derart angeordnet ist, dass die Hebelwirkung ausgehend. von der ersten Stellung in Richtung einer zweiten Stellung des ViergelenkKoppelgetriebes (6) abnimmt.

7. Getriebeanordnung nach einem oder mehreren der vorhergehenden Ansprüche, **dadurch gekennzeichnet, dass** der Antrieb über ein Getriebe mit der Antriebsschwinge (7) verbunden ist, wobei das Getriebe ein dem Antrieb zugeordnetes Antriebsrad und ein der Antriebsschwinge (7) zugeordnetes, mit dem Antriebsrad zusammenwirkendes Abtriebsrad aufweist.

8. Getriebeanordnung nach Anspruch 7, **dadurch gekennzeichnet, dass** das Antriebsrad einen sich über den Umfang ändernden Wälzkurvenradius und das Abtriebsrad einen zu diesem komplementär verlaufenden Wälzkurvenradius aufweisen, wobei die Wälzkurvenradien in einem Winkelbereich um die Strecklage des Viergelenk-Koppelgetriebs (6) zur zumindest bereichsweisen Ausbildung einer ersten Übersetzung des Getriebes und außerhalb des Winkelbereichs zur Ausbildung mindestens einer zweiten, zur ersten Übersetzung verschiedenen Übersetzung gewählt sind.

9. Abgasturbolader mit einem Wastegate (3) und einer Verstelleinrichtung (2) zum Verstellen des Wastegates (3), wobei die Verstelleinrichtung (2) eine Getriebeanordnung (1), insbesondere nach einem oder mehreren der vorhergehenden Ansprüche, mit einem Viergelenk-Koppelgetriebe (6) aufweist, wobei das Viergelenk-Koppelgetriebe (6) über eine mit einem Antrieb wirkverbundene Antriebsschwinge (7), eine Abtriebsschwinge (8) und eine die Abtriebsschwinge (7) und die Abtriebsschwinge (8) wirkverbindende Koppel (9) verfügt, **dadurch gekennzeichnet, dass** mindestens ein mit seiner ersten Seite (17) an einem Gehäuse (18) des Viergelenk-Koppelgetriebes (6) gelagertes Federelement (18) mit seiner zweiten Seite (19) mit der Antriebsschwinge (7), der Abtriebsschwinge (8) und/oder der Koppel (9) zur Unterstützung einer Bewegung in zumindest eine Bewegungsrichtung wirkverbunden ist und dass die Antriebsschwinge (7) um eine Antriebslagerstelle (10) drehbar gelagert ist und dass das Federelement (16) an einer Hebelarmschwinge (20) angreift, welche mit der Antriebsschwinge (7) verbunden und ebenfalls drehbar um die Antriebslagerstelle (10) gelagert ist.

## Claims

1. Gear arrangement (1) for an adjusting device (2), in particular of a wastegate (3) of an exhaust-gas turbocharger, having a four-bar coupler mechanism (6) which has a drive link (7) which is connected operatively to a drive, an output link (8) and a coupler (9) which connects the drive link (7) and the output link (8) operatively, at least one spring element (16) which is mounted with its first side (17) on a housing (18) of the gear arrangement (1) being connected operatively with its second side (19) to the drive link (7), the output link (8) and/or the coupler (9) in order to assist a movement of the four-bar coupler mechanism (6) in at least one movement direction, and the drive link (7) being mounted such that it can be rotated about a drive bearing point (10), and the spring element (16) acting on a lever arm link (20) which is connected to the drive link (7) and is likewise mounted such that it can be rotated about the drive bearing point (10).

2. Gear arrangement according to Claim 1, **characterized in that** the lever arm link (20) is arranged at a defined angle with respect to the drive link (7) and/or is shorter than, as long as or longer than the latter.

3. Gear arrangement according to Claim 1 or 2, **characterized in that** the spring element (16) presses the four-bar coupler mechanism (6) in the direction of a first position.

4. Gear arrangement according to Claim 3, **characterized in that** the spring element (16) is selected in such a way that, in the first position, it brings about a prestress on the lever arm link (20).

5. Gear arrangement according to Claim 3, **characterized in that** the spring element (16) is arranged in such a way that a lever action of the lever arm link (20) is greatest in an angular position range of the drive link, in which range the first position lies.

6. Gear arrangement according to Claim 3, **characterized in that** the spring element (16) is arranged in such a way that, starting from the first position, the lever action decreases in the direction of a second position of the four-bar coupler mechanism (6).

7. Gear arrangement according to one or more of the preceding claims, **characterized in that** the drive is connected to the drive link (7) via a gear mechanism, the gear mechanism having a drive gear which is assigned to the drive and an output gear which is assigned to the drive link (7) and interacts with the drive gear.

8. Gear arrangement according to Claim 7, **characterized in that** the drive gear has a pitch curve radius which changes over the circumference and the output gear has a pitch curve radius which runs in a complementary manner to the former, the pitch curve radii being selected in an angular range around the stretched position of the four-bar coupler mechanism (6) in order to form a first transmission ratio of the gear mechanism at least in regions and outside the angular range in order to form at least one second transmission ratio which is different from the first transmission ratio.

9. Exhaust-gas turbocharger having a wastegate (3) and an adjusting device (2) for adjusting the wastegate (3), the adjusting device (2) having a gear arrangement (1), in particular according to one or more of the preceding claims, having a four-bar coupler mechanism (6), the four-bar coupler mechanism (6) having a drive link (7) which is connected operatively to a drive, an output link (8) and a coupler (9) which connects the drive link (7) and the output link (8) operatively, **characterized in that** at least one spring element (16) which is mounted with its first side (17) on a housing (18) of the four-bar coupler mechanism (6) is connected operatively with its second side (19) to the drive link (7), the output link (8) and/or the coupler (9) in order to assist a movement in at least one movement direction, and **in that** the drive link (7) is mounted such that it can be rotated about a drive bearing point (10), and **in that** the spring element (16) acts on a lever arm link (20) which is connected to the drive link (7) and is likewise mounted such that it can be rotated about the drive bearing point (10).

## Revendications

1. Agencement de transmission (1) pour un dispositif de réglage (2), en particulier d'une soupape de décharge (3) d'un turbocompresseur à gaz d'échappement, comprenant un mécanisme d'accouplement à quadrilatère articulé (6), qui dispose d'un bras oscillant d'entraînement (7) en liaison fonctionnelle avec un entraînement, d'un bras oscillant de prise de force (8) et d'une bielle (9) reliant fonctionnellement le bras oscillant d'entraînement (7) et le bras oscillant de prise de force (8), au moins un élément de ressort (16) monté avec son premier côté (17) sur un boîtier (18) de l'agencement de transmission (1) étant en liaison fonctionnelle par son deuxième côté (19) avec le bras oscillant d'entraînement (7), le bras oscillant de prise de force (8) et/ou la bielle (9) afin d'assister un mouvement du mécanisme d'accouplement à quadrilatère articulé (6) dans au moins une direction de déplacement, et le bras oscillant d'entraînement (7) étant monté à rotation autour d'un point de palier d'entraînement (10) et l'élément de ressort (16) venant en prise sur un bras oscillant de levier (20), qui est connecté au bras oscillant d'entraînement (7) et qui est également monté de manière à pouvoir tourner autour du point de palier d'entraînement (10).

2. Agencement de transmission selon la revendication 1, **caractérisé en ce que** le bras oscillant de levier (20) est disposé suivant un angle déterminé par rapport au bras oscillant d'entraînement (7) et/ou est plus court, de même longueur ou plus long que celui-ci.

3. Agencement de transmission selon la revendication 1 ou 2, **caractérisé en ce que** l'élément de ressort (16) force le mécanisme d'accouplement à quadrilatère articulé (6) dans la direction d'une première position.

4. Agencement de transmission selon la revendication 3, **caractérisé en ce que** l'élément de ressort (16) est sélectionné de telle sorte qu'il provoque dans la première position une précontrainte sur le bras oscillant de levier (20).

5. Agencement de transmission selon la revendication 3, **caractérisé en ce que** l'élément de ressort (16) est disposé de telle sorte qu'un effet de levier du bras oscillant de levier (20) soit le plus important dans une plage de position angulaire du bras oscillant d'entraînement dans laquelle se trouve la première position.

6. Agencement de transmission selon la revendication 3, **caractérisé en ce que** l'élément de ressort (16) est disposé de telle sorte que l'effet de levier diminue à partir de la première position dans la direction d'une deuxième position du mécanisme d'accouplement à quadrilatère articulé (6).

7. Agencement de transmission selon l'une quelconque ou plusieurs des revendications précédentes, **caractérisé en ce que** l'entraînement est connecté par le biais d'une transmission au bras oscillant d'entraînement (7), la transmission présentant une roue d'entraînement associée à l'entraînement et une roue de prise de force coopérant avec la roue d'entraînement, associée au bras oscillant d'entraînement (7).

8. Agencement de transmission selon la revendication 7, **caractérisé en ce que** la roue d'entraînement présente un rayon de courbure de roulement variant sur la périphérie et la roue de prise de force présente un rayon de courbure de roulement s'étendant de manière complémentaire à celui-ci, les rayons de courbure de roulement étant sélectionnés dans une plage angulaire de la position d'extension du mécanisme d'accouplement à quadrilatère articulé (6) en vue de réaliser au moins en partie une première démultiplication de la transmission et à l'extérieur de la plage angulaire en vue de réaliser au moins une deuxième démultiplication différente de la première.

9. Turbocompresseur à gaz d'échappement comprenant une soupape de décharge (3) et un dispositif de réglage (2) pour régler la soupape de décharge (3), le dispositif de réglage (2) présentant un agencement de transmission (1), en particulier selon l'une quelconque ou plusieurs des revendications précédentes, avec un mécanisme d'accouplement à quadrilatère articulé (6), le mécanisme d'accouplement à quadrilatère articulé (6) disposant d'un bras oscillant d'entraînement (7) en liaison fonctionnelle avec un entraînement, d'un bras oscillant de prise de force (8) et d'une bielle (9) reliant fonctionnellement le bras oscillant d'entraînement (7) et le bras oscillant de prise de force (8), **caractérisé en ce qu'**au moins un élément de ressort (16) monté avec son premier côté (17) sur un boîtier (18) du mécanisme d'accouplement à quadrilatère articulé (6) est en liaison fonctionnelle par son deuxième côté (19) avec le bras oscillant d'entraînement (7), le bras oscillant de prise de force (8) et/ou la bielle (9) afin d'assister un mouvement dans au moins une direction de déplacement, et **en ce que** le bras oscillant d'entraînement (7) est monté à rotation autour d'un point de palier d'entraînement (10) et **en ce que** l'élément de ressort (16) vient en prise sur un bras oscillant de levier (20), qui est connecté au bras oscillant d'entraînement (7) et qui est également monté de manière à pouvoir tourner autour du point de palier d'entraînement (10).
